# EUROPÄISCHE PATENTSCHRIFT

(11) **EP 3 900 168 B1**
(45) Veröffentlichungstag und Bekanntmachung des Hinweises auf die Patenterteilung: **06.05.2026**
(21) Anmeldenummer: 19820709.4
(22) Anmeldetag: 10.12.2019
(51) Int. Cl.: H02K 15/02, B23K 9/16, B23K 9/173, B23K 10/02, B23K 26/12, B23K 26/24, B32B 7/025, B32B 7/12, B32B 15/06, B32B 15/08, B32B 15/18, H02K 1/06, B32B 37/04, B32B 37/06

(54) **PAKETIEREN VON LAMELLEN AUS EINEM VERBUNDWERKSTOFF MITTELS SCHWEISSEN**
PACKING OF LAMINATIONS OF A COMPOSITE MATERIAL BY WELDING
EMBALLAGE PAR SOUDAGE DE LAMELLES D'UN MATÉRIAU COMPOSITE

(30) Priorität: 20.12.2018 DE 102018133207
(43) Veröffentlichungstag der Anmeldung: 27.10.2021
(73) Patentinhaber: ThyssenKrupp Steel Europe AG, 47166 Duisburg (DE)
(72) Erfinder: LEWE, Tobias, 48147 Münster (DE); SCHRAUF, Mark, 44797 Bochum (DE); QUELLER, Marco, 46562 Voerde (DE); TETZLAFF, Burkhard, 47249 Duisburg (DE); BANDORSKI, Achim, 46049 Oberhausen (DE)
(74) Vertreter: ThyssenKrupp Steel Europe AG
(86) Internationale Anmeldenummer: PCT/EP2019/084302
(87) Internationale Veröffentlichungsnummer: WO 2020/126629

(56) Entgegenhaltungen:
- EP-A1- 2 169 805
- WO-A1-2018/157943
- DE-A1- 102015 208 341
- JP-A- 2002 218 714
- JP-A- 2003 189 515
- JP-A- S 558 265
- US-A1- 2010 147 818
- US-A1- 2016 121 421
- US-B1- 6 191 510
- DATABASE COMPENDEX [online] ENGINEERING INFORMATION, INC., NEW YORK, NY, US; 1 October 2013 (2013-10-01), SALONITIS K ET AL: "CO2 laser butt-welding of steel sandwich sheet composites", Database accession no. E20134717011771
- INTERNATIONAL JOURNAL OF ADVANCED MANUFACTURING TECHNOLOGY 20131001 SPRINGER LONDON GBR, vol. 69, no. 1-4, 1 October 2013 (2013-10-01), pages 245 - 256, DOI: 10.1007/S00170-013-5025-7

## Beschreibung

Die Erfindung betrifft ein Verfahren zum Paketieren von mindestens 2 Lamellen aus einem Verbundwerkstoff durch gasgeschütztes Schmelzschweißen, ein Lamellenpaket hergestellt nach diesem Verfahren sowie dessen Verwendung.

Unter Paketieren versteht man das Fügen einzelner Lagen, sogenannter Lamellen zu einem Paket. Dabei wird ein geordneter Stapel von aufeinander angeordneten Lamellen gebildet, die zueinander unverschiebbar verfügt sind. Solche Verfahren werden zum Beispiel in die US2016/121421A1 und DE 102012001744A beschrieben. Insbesondere wird Paketieren bei der Herstellung von Elektromotoren eingesetzt. Bei der Weiterverarbeitung von Elektroband, z.B. zu einem Motor, werden die einzelnen Stator- und Rotorlamellen zu Lamellenpaketen paketiert, wie z. B. in der DE 102016005329 A1 beschrieben.

Ausschneiden von Lamellen und Paketieren sind für einlagiges (monolithisches) Elektroband in der Literatur beschrieben. Aufgrund der Komplexität der Verfahren und deren Abhängigkeit von z.B. der Dicke, der Festigkeit und insbesondere dem Vorhandensein eines Polymers ist eine Eignung des Verfahrens und eine Übertragbarkeit der Parameter auf nicht-monolithisches Blech nicht gegeben.

Die Verschweißung von Lamellen aus einem Verbundwerkstoff, die neben einer elektrisch isolierenden Lackschicht, also einer Isolation, noch eine polymere Dämpfungsschicht mit einer Dicke im Mikrometerbereich zwischen zwei Elektrobänder enthalten, stellt einige Probleme. Diese zusätzliche organische Schicht ist sehr kritisch für das Verschweißen derartiger Aufbauten. Neben Ausgasungen und damit unsauberen Schweißverbindungen können auch ganze Abrisse zwischen den Lamellen vorkommen. Ferner muss eine Beschädigung der Dämpfungsschicht in einem Umfang der die Eigenschaften des gesamten Lamellenpakets, bzw. Motors oder Generators, negativ beeinflusst unbedingt vermieden werden.

Aufgabe der vorliegenden Erfindung war es ein Paketierverfahren auf Basis von Schweißen zur Verfügung zu stellen, welches die Nachteile des Standes der Technik überwindet. Insbesondere sollen Verfahren zur Verarbeitung von Verbundwerkstoffen zur Verfügung gestellt werden. Des Weiteren sollte die Möglichkeit geschaffen werden, Pakete mit den vorhandenen Geräten und Verfahren herzustellen, um aufwändige Änderungen der Prozessschritte im Herstellungsverfahren und in Folgeverwendungen zu vermeiden.

Gelöst werden die Aufgaben durch das erfindungsgemäße Verfahren gemäß Anspruch 1. Die Elektrobandschicht wird im Folgenden auch als Elektroband, Elektroblech oder Blech bezeichnet. Die Kunststoffschicht wird auch als Polymerschicht oder polymere Schicht bezeichnet. Die beiden Elektrobandschichten sind in Ihren Eigenschaften, wie Dicke, Legierungszusammensetzung, magnetische und mechanische Eigenschaften nicht gleich. In einem Spezialfall weisen beide Elektrobandschichten die gleichen Eigenschaften auf.

Das Schmelzschweißen wird ausgewählt aus der Gruppe der Schweißverfahren enthaltend oder bestehend aus: MAG-Schweißen, WIG-Schweißen, Plasma-Schweißen und Laserstrahlschweißen.

Eine weitere Ausführung betrifft ein Verfahren in welchem das Schmelzschweißen ein Wolfram-Schutzgas-Schweißen, bevorzugt WIG-Schweißen oder Laserschweißen ist.

Eine Ausführung der Erfindung ist auf ein Verfahren gerichtet in welchem die Lamellen zu einem Lamellenpaket eines elektrischen Verbrauchers oder Erzeugers paketiert werden.

Eine Lamelle im Sinne der Erfindung ist ein Halbzeug welches unmittelbar ohne weiteren Arbeitsschritt aus einem Trennverfahren hervorgeht. Solche Trennverfahren beispielsweise Stanzen oder Laserschneiden.

Der Verbundwerkstoff liegt als Ausgangsmaterial in Form von Coils oder Platinen vor.

In einer weiteren Ausführung werden vor dem Paketieren die einzelnen Lamellen aufeinandergestapelt.

Die Lamelle kann einen komplizierten Umriss aufweisen. Dieser ist durch eine in sich geschlossene Polylinie gekennzeichnet, die eine zusammenhängende Folge von Liniensegmenten darstellt, wobei mindestens 2 gerade Liniensegmente unterschiedlicher Länge vorliegen und gegebenenfalls mindestens ein gekrümmtes Liniensegment oder Kombinationen davon. In einer Alternative weisen die Halbzeuge als zusätzliches Merkmal eine relativ große Fläche auf, bevorzugt eine Fläche größer als 15 cm², 20 cm² 25 cm², besonders bevorzugt größer als 40 cm², 50 cm², insbesondere 75 cm² oder 100 cm² und bevorzugt kleiner als 10.000 cm², besonders bevorzugt kleiner 1000 cm², insbesondere kleiner 500 cm², 250 cm², 200 cm².

Ein erfindungsgemäß einzusetzender Verbundwerkstoff weist folgende Merkmale auf:
Vorzugsweise weist der Verbundwerkstoff spezifische Ummagnetisierungsverluste bei P1,0; 50 Hz im Bereich von 0,7 bis 7 W/kg und bei P1,5; 50 Hz im Bereich von 1,9 bis 15 W/kg und/oder eine Polarisation bei J2500 im Bereich von 1,49 T bis 1,7 T und bei J5000 im Bereich von 1,6 T bis 1,8 T, ermittelt in Anlehnung an DIN EN 60404-2, auf.

In einer bevorzugteren Ausführungsform weist der Verbundwerkstoff spezifische Ummagnetisierungsverluste bei P1,0; 50 Hz im Bereich von 0,8 bis 3,5 W/kg und bei P1,5; 50 Hz im Bereich von 2,0 bis 8,0 W/kg und/oder eine Polarisation bei J2500 im Bereich von 1,49 bis 1,71 T und bei J5000 im Bereich von 1,60 bis 1,80 T, ermittelt in Anlehnung an DIN EN 60404-2, auf.

In einer besonders bevorzugteren Ausführungsform weist der Verbundwerkstoff spezifische Ummagnetisierungsverluste bei P1,0; 50 Hz im Bereich von 1,0 bis 1,5 W/kg und bei P1,5; 50 Hz im Bereich von 2,4 bis 3,3 W/kg und/oder eine Polarisation bei J2500 im Bereich von 1,49 bis 1,57 T und bei J5000 im Bereich von 1,60 bis 1,65 T, ermittelt in Anlehnung an DIN EN 60404-2, auf.

Vorzugsweise weist der Verbundwerkstoff spezifische Ummagnetisierungsverluste bei P1,0; 400 Hz im Bereich von 8 bis 120 W/kg; bei P1,5; 400 Hz von 18 bis 360 W/kg; und/oder eine Polarisation bei J2500 im Bereich von 1,45 T bis 1,75 T und bei J5000 im Bereich von 1,45 T bis 1,85 T und bei J10.000 im Bereich von 1,50 und 1,95 T ermittelt in Anlehnung an DIN EN 60404-2 auf.

In einer bevorzugteren Ausführungsform weist der Verbundwerkstoff spezifische Ummagnetisierungsverluste bei P1,0; 400 Hz im Bereich von 10 bis 25 W/kg; bei P1,5; 400 Hz von 25 bis 49 W/kg; und/oder eine Polarisation bei J2500 im Bereich von 1,45 T bis 1,75 T und bei J5000 im Bereich von 1,45 T bis 1,85 T und bei J10.000 im Bereich von 1,50 und 1,95 T ermittelt in Anlehnung an DIN EN 60404-2 auf.

Vorzugsweise weist der Verbundwerkstoff eine mindest Streckgrenze in Längsrichtung bei Raumtemperatur von 190 bis 6510 MPa und eine maximale Zugfestigkeit von 310 bis 7640 MPa und eine mindest Bruchdehnung A80 von 6 bis 48 % gemessen nach DIN EN ISO 6892-1 sowie eine Härte Hv5 von 100 - 250 auf.

In einer bevorzugten Ausführungsform weist der Verbundwerkstoff eine mindest Streckgrenze in Längsrichtung bei Raumtemperatur von 310 bis 510 MPa und eine maximale Zugfestigkeit von 400 bis 640 MPa und eine mindest Bruchdehnung A80 von 7 bis 32 % gemessen nach DIN EN ISO 6892-1 sowie eine Härte Hv5 von 130 - 250 auf.

Das Material weist eine Anisotropie bei P1,0; 400 Hz im Bereich von 6 bis 17 % auf.

Der erfindungsgemäß einzusetzende Verbundwerkstoff weist im Anwendungsbereich eines Stator- und/oder Rotorpakets oder Generatorpaketes einen vergleichbaren Eisenfüllfaktor (wie unten beschrieben) auf.

Vorzugsweise beträgt der Eisenfüllfaktor in einem Stator- und/oder Rotorpaket unter Verwendung des erfindungsgemäßen Verbundwerkstoffs zwischen 85,0% und 99,7 %, mehr bevorzugt 93,0 % bis 99,0 %, noch mehr bevorzugt 98,0 % bis 99,0 % und am meisten bevorzugt 98,3 % bis 98,8 %.

Durch den Einsatz des Verbundwerkstoffs kann nicht nur aktiv der entstehende Körperschall im Elektromotor signifikant reduziert, sondern zudem durch beispielsweise Variation der eingesetzten Elektrobandblechdicken entweder ein weiterer Kostenvorteil und/oder einen erhöhten Wirkungsgrad des Elektromotors oder Generators generiert werden.

Der Verbundstoff verhindert und/oder dämpft die erzeugten Schwingungen an ihrer Quelle. Dadurch wird eine Übertragung auf das Gehäuse und benachbarte Bauteile verhindert. Der von dem Elektromotor erzeugte Körperschall aber zusätzlich auch der vom Gehäuse erzeugte Luftschall wird dadurch deutlich reduziert. Mithin findet eine Verringerung der akustischen Emission des gesamten Elektromotors statt.

Die spezifischen Ummagnetisierungsverluste von Elektrobandblechen hängen sehr stark von den Dicken bzw. von dem Querschnitt der eingesetzten Bleche ab. In der Regel gilt, dass je kleiner die Schichtdicke des Elektrobands ist, desto geringer fallen die Wirbelstromverluste und somit die spezifischen Ummagnetisierungsverluste aus. Insbesondere bei hohen elektrischen Frequenzen steigen die Ummagnetisierungsverluste überproportional. Durch die Verwendung des erfindungsgemäßen Verbundblechs können - im Vergleich zu einem monolithischen Elektroband mit einer Dicke von beispielsweise 0,5 mm - zwei Elektrobänder der gleichen Qualität mit einer Dicke von 0,25 mm miteinander verklebt werden. Bezogen auf einen Motortyp kann dadurch entweder die Effizienz des Motors signifikant erhöht oder der Bau eines kleineren Motors mit gleicher Effizienz ermöglicht werden. Letzteres würde einen Gewichtsvorteil mit sich bringen. Ferner ist auch die Verwendung eines Elektrobands geringerer Qualität möglich.

In der Praxis kommen die Verbundwerkstoffe selbst als auch die daraus erzeugten Bauteile teilweise in Kontakt mit unterschiedlichen teils sehr aggressiven Ölen, die die polymere Schicht angreifen können und somit zu einer Beschädigung der Polymerschicht bis hin zur Delamination führen. Es ist daher wünschenswert, dass die polymere Schicht gegen solche technischen Öle beständig ist.

Die Polymerschicht ist in einer Alternative ein viskoelastisches Material und enthält oder besteht im Wesentlichen aus einem viskoelastischen Polymer. Im Sinne der Erfindung bedeutet der Begriff "im Wesentlichen", dass mindestens 50 %, 55%, 60 %, 65%, 70 %, 72% 74% 76%, 78%, bevorzugt 80 %, 82%,84% ,86%, 88%, besonders bevorzugt 90%, 91%, 92%, 93%, 94%, 95%, insbesondere 96%, 97%, 98%, 99% oder 100 % (Volumen oder Gewichtsprozent) eines Materials, wie hier zum Beispiel des vikoelastischen Materials, aus einem bestimmten Stoff, hier viskoelastisches Polymer, besteht.

Die Polymere können in einer Alternative isotrope, in einer weiteren Alternative anisotrope Materialien sein, insbesondere im Hinblick auf ihre elastischen Eigenschaften.

In einer Ausführung der vorliegenden Erfindung werden viskoelastische Polymere eingesetzt, Ausgewählt aus der Gruppe enthaltend oder bestehend aus: Urethankautschuke, Elastomere auf Fluorbasis, Kautschuke auf Fluorbasis, Silikonkautschuke, Nitrilkautschuke, Butylkautschuke, Acrylkautschuke, Naturkautschuke, Styrol-Butadien-Kautschuke, Polyester, Polyurethane, Polyamide, Ethylen-Vinylacetat-Copolymere, Polyvinylbutyral, Polyvinylbutyral-Polyvinylacetat-Copolymere und Epoxy-Acrylat-Netzwerke und Kombinationen davon;
bevorzugt Polyester, Polyurethane, Polyamide und Kombinationen davon.

In einer weiteren Ausführung werden thermoplastische Polymere eingesetzt, die aus der Gruppe ausgewählt sind, die Polyacrylaten, Polycarbonaten, Polyetherimiden besteht. Polyester, Polysulfone, Polystyrole, Acrylnitril-Butadien-Styrol-Blockcopolymere, Polypropylene, Acetalpolymere, Polyamide, Polyvinylchloride, Polyethylene, Polyurethane und Kombinationen davon; bevorzugt Polyester, Polyurethane, Polyamide und Kombinationen davon enthält oder daraus besteht.

In einer Alternative sind die Polymere auch vernetzbar, um ihre Festigkeit zu erhöhen. Üblicherweise werden diese als wärmehärtbare oder strahlenhärtbare Harze klassifiziert. Ein solches Harz befindet sich vor der Herstellung des Verbundwerkstoffes in einem thermoplastischen Zustand. Während des Herstellungsprozesses wird das wärmehärtbare oder strahlenhärtbare Harz typischerweise zu einem festen Zustand gehärtet und / oder vernetzt. In Abhängigkeit von dem speziellen verwendeten Harz kann mindestens ein Härtungsmittel, z. B. ein Katalysator, enthalten sein, welcher, bei Aussetzen einer geeigneten Energiequelle (wie Wärmeenergie oder Strahlung wie zum Beispiel IR-, UV-Herr, Röntgen-, Elektronen-Strahlung) die Polymerisation des wärmehärtbaren Harzes initiiert. Besonders bevorzugte viskoelastische Polymere sind solche auf Basis von Acrylaten.

Erfindungsgemäß können auch Mischungen von beliebigen der vorstehenden Polymere, bzw. deren Ausgangsstoffen verwendet werden.

In einer Ausführung, einer besonders bevorzugten Ausführung der vorliegenden Erfindung wird als Polymer ein Acrylat - basiertes Copolymer, bevorzugt hochmolekular und/oder vernetzt eingesetzt. Insbesondere wird ein Copolymer vorzugsweise aus einer copolymerisierten Mischung von mindestens einer Alkylacrylatester-Monomereinheit und/oder Alkylmethacrylatester-Monomereinheit, wobei beide eine Alkylgruppe mit 1 bis 12 Kohlenstoffatomen aufweisen, einer Glycidyl-Monomereinheit, einer ungesättigte Carbonsäure-Monomereinheit, und einem Vernetzer zusammensetzt, erfindungsgemäß verwendet. Hierbei ist kein Aufquellen der polymeren Schicht oder Delamination des Verbundwerkstoffs erkennbar ist.

Im Sinne der Erfindung bedeutet Acrylat - basiert, dass als Edukt im Wesentlichen ein Acrylat eingesetzt wird (mit der Definition des Begriffs "im Wesentlichen" wie oben beschrieben; zusätzlich betreffen die Prozentangaben in einer Alternative das Mol-Verhältnis. Als Acrylat wird ein Edukt erfindungsgemäß bezeichnet, ausgewählt aus der Gruppe enthaltend oder bestehend aus: Acrylsäure, Methacrylsäure, (Meth)Acrylsäureester mit einer Alkylgruppe die ein bis 12 Kohlenstoffatomen aufweist, bevorzugt 4-12; oder Mischungen hiervon.

In einer mehr bevorzugten Ausführungsform setzt sich das vernetzte hochmolekulare Acrylatbasierte Copolymer ausschließlich aus den beiden Komponenten, der copolymerisierten Mischung und dem Vernetzer, zusammen.

In einer weiter bevorzugten Ausführungsform besteht die copolymerisierte Mischung aus mindestens einer Alkylacrylatester-Monomereinheit und/oder Alkylmethacrylatester-Monomereinheit, wobei beide eine Alkylgruppe mit 1 bis 12 Kohlenstoffatomen aufweisen, einer Glycidyl-Monomereinheit und einer ungesättigten Carbonsäure-Monomereinheit.

Vorzugsweise ist die Glycidyl-Monomereinheit ausgewählt aus der Gruppe enthaltend oder bestehend aus Allylglycidylether, Glycidylacrylatester, Glycidylmethacrylatester und/oder Mischungen hiervon.

Vorzugsweise weist die Alkylacrylatester-Monomereinheit und/oder Alkylmethacrylatester-Monomereinheit eine Alkylgruppe mit 4 bis 12 Kohlenstoffatomen auf.

Sofern die polymere Schicht eine Glassübergangstemperatur von höher -15 °C aufweist kann gemäß einer bevorzugten Ausführungsform der zu copolymerisierenden Mischung eine Alkylacrylatester-Monomereinheit und/oder Alkylmethacrylatester-Monomereinheit mit einer Alkylgruppe mit 1 bis 4 Kohlenstoffatomen zugegeben werden.

Gemäß einer bevorzugten Ausführungsform setzt sich das vernetzte hochmolekulare Acrylatbasierte Copolymer aus einer copolymerisierten Mischung von mindestens 55 bis 85 Gew.-% einer Alkylacrylatester-Monomereinheit und/oder Alkylmethacrylatester-Monomereinheit, wobei beide eine Alkylgruppe mit 4 bis 12 Kohlenstoffatomen aufweisen, 0 bis 35 Gew.-% einer Alkylacrylatester-Monomereinheit und/oder Alkylmethacrylatester-Monomereinheit, wobei beide eine Alkylgruppe mit 1 bis 4 Kohlenstoffatomen aufweisen, 0,01 bis 2 Gew.-% einer Glycidyl-Monomereinheit, 1 bis 15 Gew.-%, mehr bevorzugt 3 bis 13 Gew.-% einer ungesättigte Carbonsäure-Monomereinheit, und 0,05 bis 1 Gew.-% eines Vernetzers zusammen. Vorzugsweise weist die copolymerisierte Mischung eine mittlere molare Masse im Bereich von 500 bis 1500 kDa, mehr bevorzugt 600 bis 1000 kDa, noch mehr bevorzugt 700 bis 900 kDa, am meisten bevorzugt 800 kDa ± 20 kDa auf. Die mittlere molare Masse wird hierbei mittels GPC ermittelt. Zur Kalibrierung wurde Polystyrolstandard verwendet.

Vorzugsweise wird die Alkylacrylatester-Monomereinheit und/oder Alkylmethacrylatester-Monomereinheit, aufweisend eine Alkylgruppe mit 4 bis 12 Kohlenstoffatomen ausgewählt aus 2-Ethylhexylacrylat, Isooctylacrylat, Acrylsäurebutylester, 2-Methylbutyl-acrylat, 4-Methyl-2-pentyl-acrylat, Isodecylmethacrylat, Acrylsäuremethylester, Acrylsäureethylester, Methacrylsäuremethylester und/oder einer Mischung hiervon.

Vorzugsweise wird die ungesättigte Carbonsäure-Monomereinheit ausgewählt aus Acrylsäure, Methacrylsäure, Fumarsäure und/oder einer Mischung hiervon. Bevorzugte Mischungen setzen sich zusammen aus Acrylsäure und Methacrylsäure, aus Acrylsäure und Fumarsäure oder aus Methacrylsäure und Fumarsäure.

Gemäß einer bevorzugten Ausführungsform wird die Copolymerisation unter Zuhilfenahme eines Lösungsmittelgemisches, vorzugsweise eines Gemisches aus Essigsäureethylester und Aceton, durchgeführt. Bevorzugt weist das Lösungsmittelgemisch ein Verhältnis aus, das einen Rückfluss im Bereich von 68 bis 78 °C erlaubt.

Vorzugsweise beträgt der Feststoffanteil während der Copolymerisation im Bereich von 40 bis 60 Gew.-%.

Für die Copolymerisation wird vorzugsweise AIBN als Radikalstarter verwendet.

Weiterhin wird die Copolymerisation vorzugsweise unter einer Stickstoffatmosphäre durchgeführt, so dass ein hochmolekulares Copolymer, vorzugsweise mit einer mittleren Molmasse von ≥ 500 kDa erzielt wird.

Vorzugsweise ist der Vernetzer ausgewählt aus Aluminiumacetylacetonat (AIACA) Eisenacetylacetonat (FeACA), Titanacetylacetonat (TiACA) oder Zirkoniumacetylacetonat (ZrACA).

Gemäß einer weiteren bevorzugten Ausführungsform weist die Elektrobandschicht eine Dicke von mindestens 0,05 mm, bevorzugt 0,1 mm, besonders bevorzugt 0,2 mm, 0,25 mm, 0,27 mm, insbesondere 0,3 mm, 0,32 mm, 0,35 mm, 0,4 mm, oder 0,5 mm auf und maximal 1,5 mm, bevorzugt 1 mm, besonders bevorzugt 0,75 mm, insbesondere 0,65 mm auf.

Zur Herstellung des erfindungsgemäß einzusetzenden Verbundwerkstoffs können zwei gleich dicke oder unterschiedlich dicke Elektrobandschichten verwendet werden.

Bevorzugt ist das Elektroband ein nicht-kornorientiertes Elektroband .

Die Erfindung ist darstellbar auf Basis eines beliebigen nicht kornorientieren Elektrobandes oder - blechs. Bevorzugt besteht das nicht kornorientierte Elektroband oder -blech aus einem Stahl, der neben Eisen und unvermeidbaren Verunreinigungen 0,1 bis 3,50 Gew.-% Si, 0,01 bis 1,60 Gew.-% Al, 0,07 bis 0,65 Gew.-% Mn und bis zu 0,25 Gew.- % P enthält, sowie einem spezifischen elektrischen Widerstand von 0,13 bis 0,70 µΩm bei einer Temperatur von 50 °C, besonders bevorzugt aus einem Stahl, der neben Eisen und unvermeidbaren Verunreinigungen 2,3 bis 3,40 Gew.-% Si, 0,3 bis 1,1 Gew.-% Al, 0,07 bis 0,250 Gew.-% Mn und bis zu 0,030 Gew.- % P enthält, sowie einem spezifischen elektrischen Widerstand von 0,40 bis 0,70 µΩm bei einer Temperatur von 50 °C

In einer weiteren Variante besteht das nicht kornorientierte Elektroband oder -blech aus einem Stahl, der neben Eisen und unvermeidbaren Verunreinigungen 1,20 bis 2,50 Gew.-% Si, 0,10 bis 0,60 Gew.-% Al, 0,10 bis 0,30 Gew.-% Mn und bis zu 0,070 Gew.- % P enthält, sowie einem spezifischen elektrischen Widerstand von 0,29 bis 0,44 µΩm bei einer Temperatur von 50 °C.

Die Kunststoffschicht weist eine Dicke von mindestens 2 µm, bevorzugt mindestens 3 µm, besonders bevorzugt mindestens 4 µm, insbesondere mindestens 4,5 µm und von maximal 50 µm, bevorzugt maximal 20 µm, besonders bevorzugt 10 µm, 8 µm, insbesondere maximal 7,5 µm auf.

Um Kurzschlüsse zwischen zwei Elektrobändern zu verhindern werden die Elektrobandschichten mit einer Isolationsschicht versehen, um eine elektrische Isolation zu erzielen. Vorzugsweise weist die Elektrobandschicht eine Isolationsschicht mit einer Schichtdicke im Bereich von mindestens 0,5 µm, bevorzugt mindestens 1,0 µm, besonders bevorzugt mindestens 1,5 µm bis maximal 10 µm, bevorzugt maximal 5 µm, besonders bevorzugt bis 2,5 µm, insbesondere bis 1,5 µm auf.

Die Isolationsschicht kann aus einem organischen Polymer wie beispielsweise einem Acrylat-, Alkyd-, Epoxid-, Melamin-, Phenol-, Polyamid-, Polyester- und Polyurethanharz oder einer Mischung hiervon bestehen. Gemäß einer anderen bevorzugten Variante kann das organische Polymer weitere anorganische Komponenten, beispielsweise Aluminiumphosphat, Pigmente und/oder Füllstoffe, wie beispielsweise Titandioxid, Bariumsulfat, Calciumcarbonat (Kaolin), Siliziumdioxid oder Zinksulfid) enthalten.

In einer besonders bevorzugten Ausführungsvariante besteht die Isolationsschicht aus einem thermisch, chemisch oder strahlungs aktivierbaren Klebstoff.

In einer Ausführung werden vor dem Schweißen die einzelnen Lamellen gestanzt oder mittels Laserschneiden aus einem Ausgangsmaterial getrennt.

Eine Alternative betrifft ein Verfahren bei welchem die Lamellen durch Laserstrahlschneiden hergestellt werden. Laserstrahlschneiden ist ein dem Fachmann bekanntes Verfahren. In einer Alternative erfolgt es mit folgenden Parametern:
Gerät: Trumpf True Coax Co2 Laser; Laserleistung 1300 Watt; Wellenlänge 9300 Nm.

### Parameter:

Leistung Konturabhängig maximal 100%: 1300W; mindestens 20%: 260W; bevorzugt 40-80%; Frequenz Konturabhängig maximal 10 kHz, mindestens 1 kHz, bevorzugt 2-8 kHz, besonders bevorzugt 3-7 kHz; Geschwindigkeit maximal 25 m/min, mindestens 5 m/min, bevorzugt 10 m/min; Gasdruck 10 -15 bar, bevorzugt 12 bar, Fokuslage 0,5 mm bis 1,0 mm, bevorzugt 0,55 bis 0,75 mm, insbesondere 0,65 mm, Düsenabstand 0,5 mm bis 1,0 mm, bevorzugt 0,56 bis 0,8 mm, insbesondere 0,7 mm.

In einer weiteren Ausführung werden vor dem Schweißen die einzelnen Lamellen aufeinandergestapelt.

Die Erfindung ist auf ein Verfahren gerichtet in welchem vor dem MAG-Schweißen, WIG-Schweißen, Plasma-Schweißen, bevorzugt WIG-Schweißen die Lamellen miteinander elektrisch kontaktiert werden. Dazu wird in einer Alternative ein Kupferband eingesetzt. Zusätzlich wird in einer weiteren Alternative als Zündhilfe eine Kupferplatte verwendet.

In einer Alternative erfolgt die Kontaktierung mittels mindestens eines Klebebandes, das auf der den Lamellen zugewandten Seite eine elektrisch leitende Schicht aufweist.

In einer anderen Alternative erfolgt die Kontaktierung über fächerartig angeordnete Metallstäbe, die insbesondere einen Fächer bilden, der mitlaufend die einzelnen Lamellen analog zu oben verbindet und somit eine elektrische Verbindung ermöglicht.

In einer weiteren Alternative erfolgt die Kontaktierung über mindestens ein Nasenelement der Lamellengeometrie, die eine optimale Entgasung und Massestromfluss (Erwärmung und Absenkung der Nase) zulässt.

In einer Alternative erfolgt das Schweißen mittels WIG bei folgenden Bedingungen:
Robotersystem: Motoman HP20D mit DK-250
Prozess: WIG
Schweißanlage: EWM Tetrix 350 AC/DC
Brennersystem: Binzel Maschinenbrenner
Brennerstellung: Senkrecht zum Werkstück
Elektrode:
   Durchmesser: 1,6 bis 3,2 mm, bevorzugt 2,2 bis 2,6 mm, insbesondere 2,4mm;
   Abstand: 0,6 bis 1 mm, bevorzugt 0,7 bis 0,9 mm, insbesondere 0,8 mm
Strom: 60 -80 A, bevorzugt 70 A
Spannung: 9,5 bis 11 V, bevorzugt 10,2V
Schweißgeschw.: 5-15 cm/min, bevorzugt 8-12 cm/min, insbesondere 10 cm/min
Schutzgas: Argon, mit bis zu 5% Wasserstoff 4.6
Schutzgasmenge: 8-10 Liter/min.
Position: PG, vertikale Position fallend geschweißt.

In einer Alternative erfolgt das Schweißen mittels Laserschweißen bei folgenden Bedingungen: Laser: IPG YLS 4000;
Roboter Reis RV16L;
Optik BCO3;
Laserleistung 1-3 kW, bevorzugt 1,5 bis 2,52 kW, insbesondere 2 KW;
Schweißgeschw. 10 bis 50 mm/s, bevorzugt 15-30 mm/s, insbesondere 25 mm/s.

Gegenstand der Erfindung ist auch ein Lamellenpaket hergestellt in einem wie oben beschriebenen Verfahren.

Weiterer Gegenstand ist ein Lamellenpaket aus mindestens 2 Lamellen eines Verbundwerkstoffs der eine 1. und eine 2. Elektrobandschicht und eine dazwischen angeordnete Kunststoffschicht aufweist, dadurch gekennzeichnet, dass das Paket mindestens eine Schweißnaht aufweist, die jede einzelne Lamelle des Paketes kontaktiert und im Wesentlichen senkrecht zu der Lamellenfläche angeordnet ist.

In einer Alternative weist das geschweißte Lamellenpaket mindestens 2, bevorzugt 4, besonders bevorzugt 6 und maximal 50, bevorzugt 20, besonders bevorzugt 12 Schweißnähte auf. Insbesondere weist das Lamellenpaket genau 4, 6, 8 Schweißnähte auf, bevorzugt 6.

In einer weiteren Alternative weist das Lamellenpaket eine Transportvorrichtung auf.

Gegenstand der Erfindung ist auch ein Statorpaket und ein Rotorpaket enthaltend ein Lamellenpaket wie oben beschrieben.

Gegenstand der vorliegenden Erfindung ist außerdem die Verwendung eines Lamellenpaketes wie oben beschrieben in elektrischen Verbraucher oder Erzeuger. So werden die Lamellenpakete in elektrischen Motoren und Generatoren verwendet.

Mithin ist Gegenstand der Erfindung auch die Verwendung eines erfindungsgemäßen hergestellten Lamellenpakets in einem Stator. Ferner ist Gegenstand der Erfindung die Verwendung eines erfindungsgemäßen hergestellten Lamellenpaketes in einem Rotor. Somit ist Gegenstand der Erfindung die Verwendung eines erfindungsgemäßen hergestellten Lamellenpaketes in einem elektrischen Motor oder Generator.

Ein solches Stator- und/oder Rotorpaket kann vorzugsweise einen homogenen oder heterogenen Aufbau aufweisen. Ein homogener Aufbau besteht aus einer Vielzahl Lagen des Verbundwerkstoffs. Ein heterogener Aufbau besteht aus einer Vielzahl Lagen, also Lamellen, des erfindungsgemäß einzusetzenden Verbundwerkstoffs und dazwischen angeordneten monolithischen Elektrobandlagen. Beispielsweise kann der Aufbau eine Anordnung aufweisen, in der jede dritte Lage aus einem monolithischen Elektroband besteht. In einer Alternative kann das Paket auch nur eine, mindestens eine, mindestens 2,3,4,5,6,7,8,9, 10,11,12,13,14,15,16,17,18,20,21,22,23,24,25,26,27,28,29,30, 40, 50, 100, 500, 1000, 10000, 20000, 30000, 50000 oder mehr Lagen haben, bis zu 100000 einzelnen Lamellen (Lagen).

Weiterer Gegenstand ist ein Elektromotor enthaltend ein Stator- und/oder Rotorpaket wie oben beschrieben.

Weiterer Gegenstand ist die Verwendung eines erfindungsgemäßen Lamellenpaketes in einem Generator sowie ein Generator enthaltend ein solches Lamellenpaket.

Neben Pakettieren als Fügeverfahren oder zusätzlich dazu werden erfindungsgemäß nieten, schrauben, löten, kleben oder schweißen eingesetzt.

Überraschenderweise wurde festgestellt, dass durch das erfindungsgemäße Paketieren ein sicherer Zusammenhalt der Lamellen gewährleistet ist, ohne dabei nachteilige Änderungen der Eigenschaften zu bewirken. Insbesondere werden dadurch weder die magnetischen, akustischen, noch isolierenden Eigenschaften des Verbundwerkstoffes im Vergleich zum Stand der Technik negativ beeinflusst.

Durch das erfindungsgemäße Verfahren, insbesondere aufgrund der Kombination von Ausgangsmaterial mit Paketierschritten kann auch nicht-monolithisches Blech analog zu monolithischen Blech bearbeitet werden.

Das erfindungsgemäße Verfahren ermöglicht den Einsatz dünner Elektrobänder und die Nutzung der damit verbundenen Vorteile, insbesondere bezüglich der magnetischen Eigenschaften, in vorliegenden Vorrichtungen, Arbeitsprozessen und Verarbeitungstechniken die auf monolithisches Blech ausgelegt sind ohne oder nur mit geringen Änderungen.

Durch das vorliegende Verfahren können mit derselben Anzahl von Trenn- und Paketierschritten doppelt so viele Einzelbleche bzw. Rotor- oder Statorpakete hergestellt und weiter verarbeitet werden im Vergleich zu den bisher bekannten Verfahren. Es können Pakete mit hochwertigen Nähten ohne Nahtaussetzer hergestellt werden.

## Patentansprüche

1. Verfahren zum Paketieren von mindestens 2 Lamellen aus einem Verbundwerkstoff durch gasgeschütztes MAG-Schweißen, WIG-Schweißen oder Plasma-Schweißen, wobei der Verbundwerkstoff eine 1. und eine 2. Elektrobandschicht und eine dazwischen angeordnete Kunststoffschicht umfasst und mindestens eine Außenseite jeder Lamelle eine Isolationsschicht aufweist und vor dem MAG-Schweißen, WIG-Schweißen oder Plasma-Schweißen die Lamellen miteinander elektrisch kontaktiert werden.

2. Verfahren nach einem der vorangehenden Ansprüche, **dadurch gekennzeichnet, dass** das Schmelzschweißen ein Wolfram-Schutzgas-Schweißen ist.

3. Verfahren nach einem der vorangehenden Ansprüche **dadurch gekennzeichnet, dass** die Lamellen zu einem Lamellenpaket eines elektrischen Verbrauchers oder Erzeugers paketiert werden.

4. Verfahren nach einem der vorangehenden Ansprüche, **dadurch gekennzeichnet, dass** die 1. und 2. Elektrobandschicht jeweils eine Dicke von mindestens 0,05 mm und maximal 1,5 mm aufweisen.

5. Verfahren nach einem der vorangehenden Ansprüche, **dadurch gekennzeichnet, dass** die 1. und 2. Elektrobandschicht jeweils ein nicht-kornorientiertes Elektroband ist.

6. Verfahren nach einem der vorangehenden Ansprüche, **dadurch gekennzeichnet, dass** die Kunststoffschicht eine Dicke von mindestens 2 µm und von maximal 50 µm aufweist.

7. Verfahren nach einem der vorangehenden Ansprüche, **dadurch gekennzeichnet, dass** beide Außenseiten jeder Lamelle je eine Isolationsschicht aufweisen.

8. Verfahren nach einem der vorangehenden Ansprüche, **dadurch gekennzeichnet, dass** vor dem Schweißen die einzelnen Lamellen gestanzt oder mittels Laserschneiden aus einem Ausgangsmaterial getrennt werden.

9. Verfahren nach einem der vorangehenden Ansprüche, **dadurch gekennzeichnet, dass** vor dem Schweißen die einzelnen Lamellen aufeinandergestapelt werden.

10. Lamellenpaket hergestellt in einem Verfahren nach einem der Ansprüche 1-9.

11. Statorpaket oder Rotorpaket enthaltend ein Lamellenpaket nach Anspruch 10.

12. Elektromotor enthaltend ein Stator- und/oder Rotorpaket nach Anspruch 11.

13. Generator enthaltend ein Lamellenpaket nach Anspruch 10.

## Claims

1. Method for packaging at least 2 laminations made of a composite material by gas-shielded MAG welding, TIG welding or plasma welding, **characterized in that** the composite material comprises a first and a second electrical steel strip layer and a plastic layer arranged therebetween, and at least one outer side of each lamination has an insulation layer, and prior to MAG welding, TIG welding or plasma welding the laminations are electrically contacted with one another.

2. Method according to any one of the preceding claims, **characterized in that** the fusion welding is tungsten inert gas (TIG) welding.

3. Method according to any one of the preceding claims, **characterized in that** the laminations are packaged into a lamination stack of an electrical consumer or generator.

4. Method according to any one of the preceding claims, **characterized in that** the first and second electrical steel strip layer each have a thickness of at least 0.05 mm and at most 1.5 mm.

5. Method according to any one of the preceding claims, **characterized in that** the first and second electrical steel strip layer are each a non-grain-oriented electrical steel strip.

6. Method according to any one of the preceding claims, **characterized in that** the plastic layer has a thickness of at least 2 µm and at most 50 µm.

7. Method according to any one of the preceding claims, **characterized in that** both outer sides of each lamination each have an insulation layer.

8. Method according to any one of the preceding claims, **characterized in that** prior to welding the individual laminations are punched or separated from a starting material by laser cutting.

9. Method according to any one of the preceding claims, **characterized in that** prior to welding the individual laminations are stacked on one another.

10. Lamination stack produced in a method according to any one of claims 1 to 9.

11. Stator stack or rotor stack comprising a lamination stack according to claim 10.

12. Electric motor comprising a stator stack and/or rotor stack according to claim 11.

13. Generator comprising a lamination stack according to claim 10.

## Revendications

1. Procédé d'empaquetage d'au moins 2 lamelles en matériau composite par soudage MAG sous protection gazeuse, soudage TIG ou soudage plasma, dont le matériau composite comprend une première et une deuxième couche de tôle électrique et une couche de matière plastique disposée entre celles-ci, qu'au moins une face extérieure de chaque lamelle présente une couche isolante, et qu'avant le soudage MAG, le soudage TIG ou le soudage plasma, les lamelles sont mises en contact électrique entre elles.

2. Procédé selon l'une quelconque des revendications précédentes, **caractérisé en ce que** le soudage par fusion est un soudage au tungstène sous protection gazeuse.

3. Procédé selon l'une quelconque des revendications précédentes, **caractérisé en ce que** les lamelles sont constituées en un paquet de lamelles d'un consommateur ou d'un générateur électrique.

4. Procédé selon l'une quelconque des revendications précédentes, **caractérisé en ce que** la première et la deuxième couche de tôle électrique présentent chacune une épaisseur d'au moins 0,05 mm et d'au plus 1,5 mm.

5. Procédé selon l'une quelconque des revendications précédentes, **caractérisé en ce que** la première et la deuxième couche de tôle électrique sont chacune une tôle électrique à grains non orientés.

6. Procédé selon l'une quelconque des revendications précédentes, **caractérisé en ce que** la couche de matière plastique présente une épaisseur d'au moins 2 µm et d'au plus 50 µm.

7. Procédé selon l'une quelconque des revendications précédentes, **caractérisé en ce que** les deux faces extérieures de chaque lamelle présentent chacune une couche isolante.

8. Procédé selon l'une quelconque des revendications précédentes, **caractérisé en ce qu'**avant le soudage les lamelles individuelles sont poinçonnées ou séparées d'un matériau de départ par découpe laser.

9. Procédé selon l'une quelconque des revendications précédentes, **caractérisé en ce qu'**avant le soudage les lamelles individuelles sont empilées les unes sur les autres.

10. Paquet de lamelles obtenu par un procédé selon l'une quelconque des revendications 1 à 9.

11. Paquet de stator ou paquet de rotor contenant un paquet de lamelles selon la revendication 10.

12. Moteur électrique contenant un paquet de stator et/ou de rotor selon la revendication 11.

13. Générateur contenant un paquet de lamelles selon la revendication 10.
